# EUROPÄISCHE PATENTSCHRIFT

(11) **EP 3 383 185 B1**
(45) Veröffentlichungstag und Bekanntmachung des Hinweises auf die Patenterteilung: **25.03.2020**
(21) Anmeldenummer: 16819418.1
(22) Anmeldetag: 05.12.2016
(51) Int. Cl.: A21C 5/00, A21C 11/02, A21C 11/12

(54) **TEIG-LÄNGSSCHNEIDE- UND/ODER -PRÄGEEINRICHTUNG**
DOUGH SLITTING AND/OR EMBOSSING DEVICE
DISPOSITIF DE REFENDAGE ET/OU EMBOSSAGE DE LA PÂTE

(30) Priorität: 04.12.2015 AT 510422015
(43) Veröffentlichungstag der Anmeldung: 10.10.2018
(73) Patentinhaber: König Maschinen Gesellschaft mbH, 8045 Graz (AT)
(72) Erfinder: MAIER, Gernot, 8075 Hart bei Graz (AT); STELZER, Hannes, 8502 Lannach (AT); URSCHLER, Stefan, 8130 Frohnleiten (AT)
(74) Vertreter: Wildhack & Jellinek
(86) Internationale Anmeldenummer: PCT/AT2016/060117
(87) Internationale Veröffentlichungsnummer: WO 2017/091842

(56) Entgegenhaltungen:
- WO-A1-2014/184168
- CN-U- 201 928 885
- US-A- 3 354 842
- US-A1- 2004 142 062
- Koenig Maschinen: "Koenig - Artisan SFI - Dough sheeting line - Teigbandanlage", , 12. März 2014 (2014-03-12), Seiten 1-2, XP054977168, Gefunden im Internet: URL:https://www.youtube.com/watch?v=SK1Fha GHxsM [gefunden am 2017-02-23]

## Beschreibung

Bisher bekannt gewordene Längsschneide-Einrichtungen für Teige umfassen eine fixe Aufnahme mit Seitenschildern und beidseitigen, jedoch nur einzeln aufklappbaren Klemmungen der Aufnahmewelle für die Schneidmesser. Dies bedeutet, dass für ein Wechseln der Bearbeitungswerkzeuge, z.B. bei gewünschten Änderungen von deren Position auf der Werkzeug-Aufnahmewelle die gesamte Anlage - im Falle von nur einer Bedienungs- und Aufsichtsperson - von derselben regelrecht umschritten werden musste oder es mussten zwei Personen zur Verfügung stehen, deren jede die Klemmung auf je einer Seite zu bedienen hatte.

Die Teigbearbeitungswerkzeug-, insbesondere Messer-Aufnahmewellen sind frei drehende oder angetriebene Wellen mit seitlichen Lagerbacken und deren Justierung wird mittels Einstellschrauben bewerkstelligt.

Die Werkzeuge, also insbesondere Messer, Prägewalzen, od. dgl. können beliebig auf die Aufnahmewelle aufgeschoben und in jeweils gewünschten Positionen auf derselben fixiert werden.

Die Fixierung der Bearbeitungswerkzeuge auf der Welle erfolgte bisher mittels Klemmschrauben, um die notwendige Klemmkraft auf derselben zu erreichen, und für deren Einsatz waren bisher darauf abgestimmte eigene Werkzeuge erforderlich.

Das Dokument "Koenig - Artisan SFI - Dough sheeting line - Teigbandanlage"(https:// www.youtube.com/watch?v=SK1FhaGHxsM) offenbart eine Multiple Teigband-Langsschneideeinrichtung nach dem Stand der Technik.

Ein ganz wesentlicher Grund für die gegenständliche Neuentwicklung besteht nun darin, die Bedienung von Teig-Schneide- und/oder -Formgebungs-, insbesondere Präge-Einrichtungen wesentlich zu vereinfachen, das heißt, die Verstellung bzw. das Wechseln dieser Werkzeuge sollte von nur einer Person und rasch, sozusagen mit nur einem Handgriff, bewältigbar sein.

Gegenstand der vorliegenden Erfindung ist somit eine neue multiple Teigband-Längsschneide- und/oder - prägeeinrichtung gemäß Anspruch 1, unter anderem umfassend ein Breit-Förderband für eine, insbesondere kontinuierliche, Zuführung eines, vorzugsweise höhenkonstant gehaltenen, Breit-Teigbandes und eine oberhalb desselben angeordnete, mit einer Mehrzahl von jeweils voneinander beabstandet angeordneten Teigbearbeitungswerkzeugen, insbesondere Rund-Messern und/oder Prägescheiben bzw. -walzen bestückten, vorzugsweise angetriebene, Aufnahmewelle, welche Einrichtung dadurch gekennzeichnet ist,
- dass die Aufnahmewelle jeweils im Bereich ihrer beiden Enden beidseitig in - in Ausnehmungen der beiden Seitenschilder der Einrichtung höhenverschieb- und - einstellbar angeordneten Lagerbacken - drehgelagert ist,
- dass die beiden Lagerbacken ihrerseits jeweils mittels eines an den beiden - über eine parallel zur Aufnahmewelle ausgerichtete Verbindungsstrebe eines beidseitig ebenfalls an den Seitenschildern der Einrichtung schwenkbar und hochklappbar angelenkten Klemmhebels miteinander verbundenen - Verankerungskästen angeordneten, Werkzeuginsbesondere Schneid- und/oder -Prägetiefe-Einstellschraubtriebs höhenverstellbar sind,
- dass der Klemmhebel mit einem innerhalb seiner Verbindungsstrebe angeordneten und in dessen beidseitige Verankerungskästen hinein reichenden, mittels eines auf der Verbindungsstrebe angeordneten Einmann-/Einhand-Bedienungshandgriffs betätigbaren, in die beiden Seitenschilder der Einrichtung eingreiffähige Verankerungselemente aufweisenden Verankerungsmechanismus ausgestattet ist, und
- dass mittels in Fortsätzen der Verankerungskästen angeordneten Schraubtrieben die Aufnahmewelle und mit ihnen die auf derselben angeordneten Werkzeuge, insbesondere Rundmesser und/oder Prägewalzen, auf jeweils gewünschte Bearbeitungs- insbesondere Schneide- und/oder Prägetiefe, höhen- und betriebspositionsgenau fixierbar sind.

Die Aufnahme der Aufnahmewellen für die Schneide- und/oder Prägewerkzeuge erfolgt durch die Seitenschilder der Einrichtung mit einstellbarem Spiel oder - wesentlich besser - mittels exakt gefertigten Ausnehmungen in denselben.

Die Halte-Klemmung der Welle mit den Teigbearbeitungs-Werkzeugen erfolgt mittels eines Klemmhebels, der - was von großem Vorteil ist - nur von einer Person und zwar einhändig bedient werden kann. Dieser kann insbesondere mit einer Einrastfunktion ausgestattet sein, oder aber mit einer vergleichbaren Positionshaltung. Ein Einrasten zur Festlegung des Aufnahmewellen-Werkzeugeensembles mit den beidseitigen Drehlagern oder dessen Lösung, also das "Aushängen" wird mittels nur einen Griffes bewerkstelligt der die Verankerungselemente an beiden Seiten des Klemmbalkens gleichzeitig und gleichmäßig bedient.

Eine weitere Komponente ist eine mögliche Skalierung für eine exakte Positionierung der einzelnen Werkzeuge auf der Aufnahmewelle, welche durch auf einer Skalierungsstrebe verstellbare Positionsanzeiger ergänzt sein kann.

Die Werkzeug-Aufnahmewelle, die mit flexiblen Lagerungen ausgestattet ist, ermöglicht bevorzugter Weise ein selbstständiges Anheben der Werkzeuge vom Teigband weg für eine erleichterte Verstellung derselben auf der Aufnahmewelle.

Das Anheben bzw. Aufklappen der Aufnahmewelle mit den Werkzeugen kann in jeder beliebigen Art, insbesondere mittels Federn, Gasdruckdämpfern, elektrisch oder pneumatisch erreicht bzw. erleichtert werden.

Eine Schnellspannung der Schneidmesser/Schneidwerkzeuge auf der Aufnahmewelle lässt sich insbesondere mittels Klemmung, wie insbesondere mit Exzenterhebel, Schraubklemmung od.dgl. erreichen.

Erfindungsgemäß umfasst der oben genannte Verankerungsmechanismus des Klemmhebels zwei mit symmetrisch zueinander schrägen, nach oben auseinanderlaufenden Langlöchern ausgebildete, innerhalb der hülsenartigen Verbindungsstrebe beidseitig gegeneinander längsverschiebbaren Betätigungsbalkenteile mit den in die Seitenschilder der Einrichtung eingreiffähigen Verankerungselementen, insbesondere Einrasthaken, wobei in die beiden schrägen Langlöcher der Betätigungsbalkenteil mittels einer selbst federbelasteten, gegen die Federbelastung quer zur Verbindungsstrebe verschieblichen Einmann-/Einhand-Handgriffs jeweils ein mit demselben quer verschieblicher Verschiebezapfen eingreift und so für ein Verschieben der beiden Verankerungsbalkenteile mit den Verankerungs-, insbesondere Einrasthaken, sorgt.

Die soeben beschriebene Doppel-Löse- und Verankerungsmechanik in der Verbindungsstrebe des Klemmhebels, hat neben der erfindungsgemäß erreichten, neuen Einmann-/Einhandbedienung den Vorteil, dass sie bei nicht betätigtem Handgriff in der Verankerungsposition durchaus fixiert ist, sich jedoch mittels des federbelasteten Einmann-/Einhand-Handgriffs bei dessen Heben problemlos lösen lässt, wonach einem Auswechseln oder Anders-Positionieren der Werkzeuge auf der Aufnahmewelle nach Hochklappen des Klemmhebels, insbesondere nach Lösen des Werkzeug-Eindringetiefe-Verstellschraubtriebs nichts mehr im Wege steht.

Was die positionsfixe, voneinander beabstandete, Bindung der Werkzeuge, also insbesondere der Rundmesser und/oder Prägewalzen an die Aufnahmewelle betrifft, so hat sich hiefür besonders bewährt, dass diese eben genannten Teigbearbeitungswerkzeuge jeweils mittels Spannring mit Spannschrauben, vorzugsweise jedoch mittels Schnellspannverschluss mit Schnellspannhebel, an die Aufnahmewelle positionskonstant bindbar sind.

Von besonderem Vorteil im Zusammenhang mit dem Werkzeug-Wechsel hat es sich erwiesen, wenn die Lagerbacken der Aufnahmewelle mit deren Drehlagern in den Ausnehmungen der Seitenschilder der neuen Einrichtung jeweils federbelastet sind. Dadurch werden die Oberteile der Lagerbacken nach aufwärts geschoben, wodurch die Aufnahmewelle mit den Teigbearbeitungswerkzeugen besser zugänglich wird.

Nicht zuletzt sei erwähnt, dass das Wechseln oder die gegenseitige Positionsveränderung der Werkzeuge auf der nach Hochklappen des Klemmhebels unbehindert zugänglichen Aufnahmewelle dadurch wesentlich vereinfacht bzw. erleichtert wird, dass die beiden Seitenschilder eine dieselben miteinander verbindende, zur Aufnahmewelle und zur Verbindungsstrebe des Klemmhebels parallele Skalierungsstrebe mit Skalierung aufweisen, auf welcher eine Positionierhilfe für eine positionsgenaue Fixierung der einzelnen Rundmesser und/oder Prägewalzen und das Arrangieren von deren Abständen zueinander auf der Aufnahmewelle verschiebbar angeordnet ist und mittels Feststellschraube in jeder Skalenposition an der Skalierungsstrebe fixierbar ist.

Anhand der Zeichnung wird die Erfindung näher erläutert:
Es zeigen - jeweils ins Schrägansichten - die Fig. 1 die an dem Gestell der neuen Einrichtung angeordneten, Lagerbackenaufnahme-Ausnehmungen aufweisenden, beidseitigen Seitenschilder mit den sie miteinander verbindenden Skalierungsstreben, die Fig. 2 den mit beidseitigen Werkzeughöhenverstellt-Schraubtrieben ausgestatteten neuartigen Klemmhebel, die Fig. 3 die Aufnahmewelle für die Teig-Schneide- und/oder - Prägewalzen mit ihren beidseitigen Drehlagern in Lagerbacken, die Fig. 4 und 5 jeweils eines der Rundmesser mit Schnellverschluss- und Schraub-Klemmung für deren Fixierung auf der Aufnahmewelle, die Fig. 6 die gesamte erfindungsgemäße Teig-Schneide- und/oder Prägeeinrichtung, die Fig. 7 ein Detail des im Klemmhebel bzw. in dessen Verankerungskästen untergebrachten Verankerungsmechanismus, die Fig. 8 die Verbindungsstrebe des Klemmhebels mit den beiden beidseitig aus ihm herausragenden Verankerungselementen, also Einrasthaken, und die Fig. 9 in röntgenbildartiger Darstellung den Verankerungsmechanismus im Bereich des Einmann-/Einhand-Bedienungs-Handgriffs des Klemmhebels.

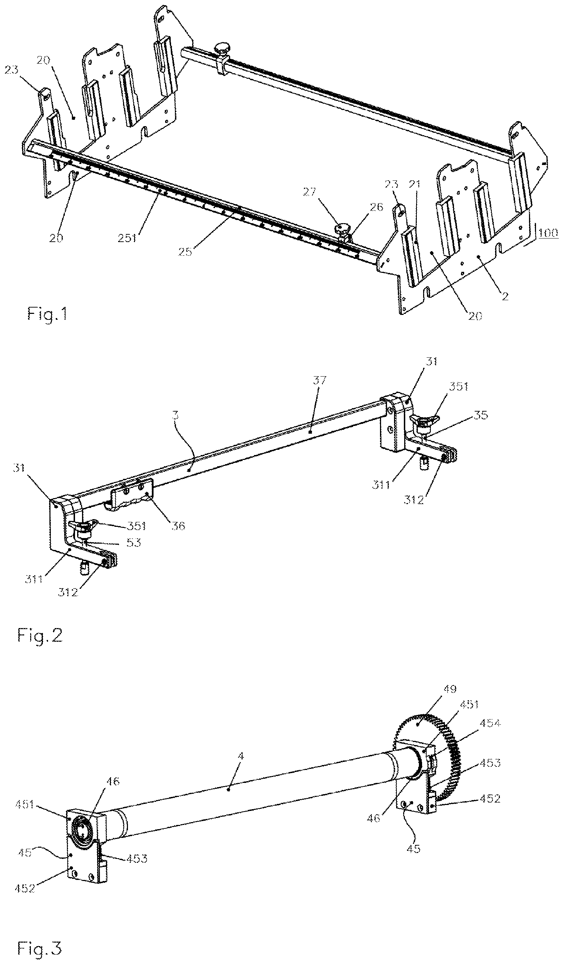

Die Fig. 1 zeigt - hier die beiden beidseitig an der nicht näher gezeigten neuen Einrichtung 100 angeordneten, jeweils paarigen Seitenschilder 2 von welchen der - erfindungsrelevante - beidseitige vordere Teil mittels Skalierungsstrebe 25 mit Skalierung 251 verbunden ist. Auf der Strebe 25 beliebig verschiebbar ist eine Werkzeug-Positionierhilfe 26, die mittels Festlegeschraube 27 mit Drehgriff auf der Strebe 25 in jeweils gewählter Position fixierbar ist. Die beiden Seitenschilder 2 weisen vorderseitig zwei Aufnahme-Ausnehmungen 20 mit jeweils zwei zueinander parallelen Rändern mit Führungsschienen 21 auf, sowie weiters zwei Einrastausnehmungen 23 für die Verankerungselemente des in der folgenden Fig. 2 näher beschriebenen Klemmhebels.

Die Fig. 2 zeigt - bei sonst gleichbleibenden Bezugszeichenbedeutungen - den erfindungsgemäß vorgesehenen Klemmhebel 3 mit den beidseitig an dessen Verbindungsstrebe 37 gebundenen Verankerungskästen 31 mit jeweils von demselben - hier etwa 90-gradig - nach vorn wegragenden Fortsätzen 311, jeweils mit SchwenkDrehlöchern 312. Die beiden eben genannten Fortsätze 311 sind jeweils von Druckschrauben, welche als für die Höhen- und damit Messerschneid- und/oder Prägewalzenpräge-Tiefeneinstellung vorgesehene Schraubtriebe 35 mit Drehknopf 351 dienen, durchdrungen.

Aus der Fig. 3 ist - bei sonst gleichbleibenden Bezugszeichenbedeutungen - die für die Aufnahme der auf ihr im Abstand wählbar fixierbaren Teig-Schneide- und/oder Prägewerkzeuge vorgesehene Aufnahmewelle 4 mit ihren beiden endständigen, die Drehlager 46 für die Lagerung der Aufnahmewelle 4 aufweisenden Lagerbacken 45 ersichtlich. Die Fig. 3 zeigt weiters zwei Teile 451, 452 der Lagerbacken 45 und zwar jeweils den mit Führungrillen 454 ausgebildeten Oberteil 451, der vom Basisteil 452 mit nach oben hin wirkender Feder 453 federbelastet ist.

Wie ebenfalls in Fig. 3 gezeigt, trägt die Aufnahmewelle 4 an ihrem - hier rechten - Ende ein Zahnrad 49 das mit einem Zahnrad einer - nicht gezeigten - Wellenantriebseinheit kämmt.

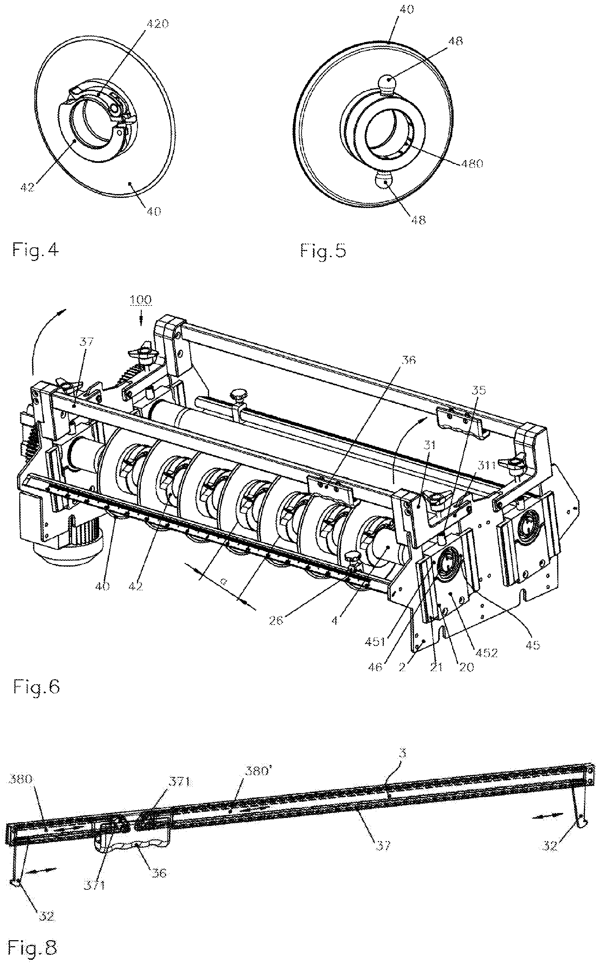

Weiters zeigen die beiden Fig. 4 und 5 - bei sonst gleichbleibenden Bezugszeichenbedeutungen - zweit Arten der neuen Klemmbefestigung von Teig-Schneidmessern 40 an der - hier nicht gezeigten - Aufnahmewelle 4 und zwar Fig. 4 eine im Rahmen der Erfindung besonders bevorzugte Lösung mit einem Zentralring mit Schnellklemmverschluss 42 mit Schnellspannhebel 420 und Fig. 5 mit mittels zwei Klemmschrauben 48 an die Welle 4 festklemmbarem geteilten Zentral-Klemmring 480.

In der Fig. 6 ist - bei sonst gleichbleibenden Bezugszeichenbedeutungen - die gesamte erfindungsgemäße Teig-Längs-Schneide- und/oder -Prägeeinrichtung 100 gezeigt, welche die in den vorbesprochenen Fig. 1 bis 4 jeweils näher gezeigten Einzelkomponenten im Zusammenbau insgesamt umfasst:
Es ist dort gezeigt, wie in den beiden vorderen Aufnahme-Ausnehmungen 20 der beiden Seitenschilde 2, die beiden in den Schienen 21 höhenvariabel führbaren, zweitteiligen Lagerbacken 45 mit in den deren Oberteilen 451 angeordneten Drehlagern 46 für die Werkzeug-Aufnahmewelle 4, hier mit gleichmäßig voneinander beabstandeten, mittels Schnellverschlüssen 42 an dieselbe fixierten Rotationsmessern 40, angeordnet ist.

Die beiden Seitenschilde 2 der Fig. 6 sind durch an sich zwei Skalierungsstreben 25 od.dgl. miteinander verbunden, wobei auf beiden Streben 25 jeweils eine dort verschieb- und feststellbare Positionierhilfe 26 angeordnet ist.

Die beiden Lagerbacken 45 sind in die Ausnehmungen 20 eingeschoben, ihre Oberteile 451 mit den Aufnahmewellen 4 -Drehlagern 46 sind mittels nicht sichtbaren Druckfedern 453, welche die Oberteile 451 nach aufwärts drücken, mit den Unterteilen 452 verbunden.

Beide Lagerbacken 45 bzw. deren Oberteile 451 sind jeweils über einen Höhenverstell-Schraubtrieb 35 mit den abgewinkelten Fortsätzen 311 der beiden - mittels Verbindungsstrebe 37 mit Einmann-/Einhand-Griff 36 miteinander verbundenen - Verankerungskästen 31 des jeweils beidseitig an die genannten Seitenschilde 2 angelenkten Klemmhebels 3 höhenverstellbar verbunden. Durch Anheben bzw. zur Verbindungsstrebe 37 Hindrücken des Einmann-/Einhand-Bedienungsgriffs 36 lassen sich in den beiden Verankerungskästen 31 untergebrachte Einrasthaken 32 aus der Verankerung in den Seitenschilden 2 lösen und der an die Seitenschilder 2 angelenkte Klemmhebel 3 lässt sich dann, wie durch zwei gekrümmte Pfeile angedeutet, hochklappen, sodass dann der Zugang zu den Rundmessern 40 frei liegt, und dieselben beispielsweise je nach Bedarf in andere Positionen auf der Werkzeug-Aufnahmewelle 4 verschoben werden können.

Die in Fig. 6 gezeigten beiden Seitenschilder 2 der Einrichtung 100 sind zweiteilig, fast symmetrisch zueinander gebaut und in deren beiden, jeweils "hinteren" zweite Ausnehmungen kann ebenfalls jeweils ein Lagerbalken für die Dreh-Lagerung einer zweiten, beispielsweise Rotationsbürsten tragenden Aufnahmewelle, die prinzipiell gleich gebaut und angeordnet sein kann, wie die bisher beschriebene Werkzeug-Aufnahmewelle 4 gemäß der Erfindung, eingeschoben werden.

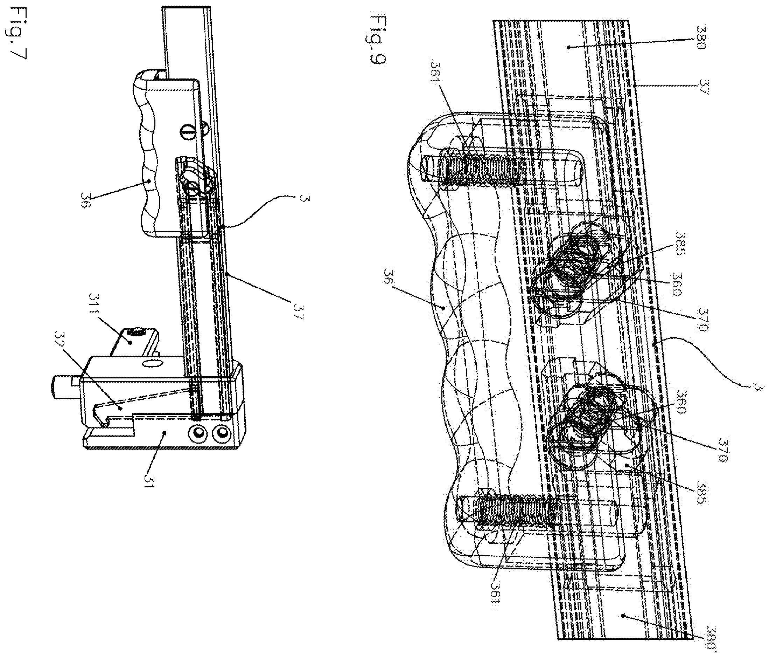

Die Fig. 7 zeigt - bei sonst gleichbleibenden Bezugszeichenbedeutungen - einen rechtem Teil der Verbindungsstrebe 37 des Klemmhebels 3 mit dem Verankerungskasten 31 mit winkeligem Fortsatz 311, wobei aus der Verbindungsstrebe 37 der durch Anheben des Einmann-/Einhand-Bedienungsgriffs 36 der Einrasthaken 32 des Klemmhebels 3 aus einer Einhaköffnung oder von einen Vorsprung des Seitenschilds 2 gelöst werden kann oder bei Auslassen des Griffs 36 in Verankerungsstellung verbringbar ist.

Die Fig. 8 zeigt - bei sonst gleichbleibenden Bezugszeichenbedeutungen - global die hohle Verbindungsstrebe 37 mit dem auf ihr assymetrisch angeordneten, von der linken Seite her leicht zugänglichen in quer zum Verlauf desselben ausgerichteten Langlöchern 371 mit darin führbaren Zapfen beweglichen Einmann-/Einhand-Bedienungshandgriff 36, mittels welchem, in der hülsenartigen Verbindungsstrebe 37 gegensätzlich seitverschiebbare Verankerungsbalkenteile 380, 380' mit den Einrasthaken 32 jeweils gegensätzlich nach außen oder innen seitverschiebbar sind.

Die Fig. 9 zeigt - bei sonst gleichbleibenden Bezugszeichenbedeutungen -im Detail den Verankerungsmechanismus des Klemmhebels 3 mit den beiden in demselben gegensätzlich seitverschiebbaren ungleich langen Verankerungsbalkenteilen 380, 380' mit ihren beiden nach oben hin auseinanderstrebend schrägen Langlöchern 385 in welche jeweils ein - in zum Verlauf der Verbindungsstrebe 3 senkrechten Langlöchern 370 verschiebbarer Zapfen 360 des jeweils mittels Federn 361 in einer "unteren" Stellung gehaltenem und gegen die Federbelastung anhebbarer Bedienungshandgriff 36 eingreift, wodurch die beiden Verankerungsbalken-Teile 380, 380' in der Verbindungsstrebe 37 und mit denselben die hier nicht gezeigten Einrastbalken 32 gegeneinander seitverschieblichen aus einer in die - hier nicht gezeigten - Seitenschilder 2 eingreifenden Einraststellung lösbar ist, und so das oben beschriebene Hochklappen des Klemmhebels 3 ermöglicht.

## Patentansprüche

1. Multiple Teigband-Längsschneide- und/oder -prägeeinrichtung (100), umfassend ein Breit-Förderband für eine, insbesondere kontinuierliche, Zuführung eines, vorzugsweise höhenkonstant gehaltenen, Breit-Teigbandes und eine oberhalb desselben angeordnete, mit einer Mehrzahl von jeweils voneinander beabstandet angeordneten Teigbearbeitungswerkzeugen, insbesondere Rund-Messern (40) und/oder Prägewalzen, bestückte, vorzugsweise angetriebene, Aufnahmewelle (4),
- wobei die Aufnahmewelle (4) jeweils im Bereich ihrer beiden Enden beidseitig in in Ausnehmungen (20) der beiden Seitenschilder (2) der Einrichtung (100) höhenverschieb- und -einstellbar angeordneten Lagerbacken (45) - drehgelagert ist,
- wobei die beiden Lagerbacken (45) ihrerseits jeweils mittels eines an den beiden - über eine parallel zur Aufnahmewelle (4) ausgerichtete Verbindungsstrebe (37) eines beidseitig ebenfalls an den Seitenschildern (2) der Einrichtung (100) schwenkbar und hochklappbar angelenkten Klemmhebels (3) miteinander verbundenen - Verankerungskästen (31) angeordneten Werkzeug-, insbesondere Schneid- und/oder Prägetiefe-Einstellschraubtriebs (35), höhenverstellbar sind,
- wobei der Klemmhebel (3) mit einem innerhalb seiner Verbindungsstrebe (37) angeordneten und in dessen Verankerungskästen (31) hinein reichenden, mittels eines auf der Verbindungsstrebe (37) angeordneten Einmann-/Einhand-Bedienungshandgriffs (36) betätigbaren, in die beiden Seitenschilder (2) der Einrichtung (100) eingreiffähige Verankerungselemente (32) aufweisenden Verankerungsmechanismus ausgestattet ist, **dadurch gekennzeichnet,**
- **dass** mittels in Fortsätzen (311) der Verankerungskästen (31) angeordneten Schraubtrieben (35) die Aufnahmewelle (4) und mit ihnen die auf derselben angeordneten Rundmesser (40) und/oder Prägewalzen auf jeweils gewünschte Schneide- und/oder Prägetiefe höhen- und betriebspositionsgenau fixierbar sind und dass der Verankerungsmechanismus des Klemmhebels (3) zwei mit symmetrisch zueinander schrägen, nach oben hin auseinanderstrebenden Langlöchern (385) ausgebildete, innerhalb der hülsenartigen Verbindungsstrebe (37) gegenteilig längsverschiebbaren Betätigungsbalkenteilen (380, 380') mit den in die Seitenschilder (2) der Einrichtung (100) eingreiffähigen Verankerungselementen, insbesondere Einrasthaken (32) umfasst, wobei in die beiden schrägen Langlöcher (385) der beiden Betätigungsbalkenteile (380, 380') mittels eines selbst federbelasteten, gegen die Federbelastung quer, insbesondere senkrecht, zur Verbindungsstrebe (37) verschieblichen Einmann-/Einhand-Bedienungs-Handgriffs (36) jeweils ein mit demselben quer verschieblicher Schiebezapfen eingreift und so für ein gegensätzliches Verschieben der Verankerungsbalken (380, 380') mit den Verankerungs-, insbesondere Einrasthaken (32) sorgt.

2. Einrichtung nach Anspruch 1, **dadurch gekennzeichnet, dass** die einzelnen Teigbearbeitungswerkzeuge, insbesondere Rundmesser (40) und/oder Prägewalzen, jeweils mittels Spannring mit Spannschrauben (48), vorzugsweise jedoch mittels Schnellspannverschluss (42) mit Schnellspannhebel (420), an die Aufnahmewelle (4) positionskonstant bindbar sind.

3. Einrichtung nach einem der Ansprüche 1 bis 2, **dadurch gekennzeichnet, dass** die Lagerbacken (45) der Aufnahmewelle (4) mit den Drehlagern (46) in den Ausnehmungen (20) der Seitenschilder (2) federbelastet sind.

4. Einrichtung nach einem der Ansprüche 1 bis 3, **dadurch gekennzeichnet, dass** die beiden Seitenschilder (2) eine dieselben miteinander verbindende, zur Aufnahmewelle (4) und zur Verbindungsstrebe (37) des Klemmhebels (3) parallele Skalierungsstrebe (25) mit Skalierung (250) aufweist, auf welcher eine Positionierhilfe (26) für eine positionsgenaue Fixierung der einzelnen Rundmesser (40) und/oder Prägewalzen und das Arrangieren von deren Abständen (a) zueinander auf der Aufnahmewelle (4) verschiebbar angeordnet ist und mittels Feststellschraube (27) in jeder Skalenposition an der Skalierungsstrebe (25) fixierbar ist.

## Claims

1. Multiple dough-strip longitudinal cutting and/or stamping device (100), comprising a wide conveyor belt for an, in particular continuous supply of a wide dough strip, preferably held at constant height and a preferably driven receiving shaft (4) arranged above said wide dough strip, equipped with a plurality of dough processing tools arranged in each case spaced apart from one another, in particular circular knives (40) and/or stamping rollers,
- wherein the receiving shaft (4) is mounted rotatably in each case in the region of its two ends on both sides in bearing cheeks (45) arranged height displaceably and adjustably in recesses (20) of the two side panels (2) of the device (100),
- wherein the two bearing cheeks (45) on their part are height adjustable in each case by means of a tool-, in particular cutting- and/or stamping depth-adjustment screw drive (35) arranged on the two anchoring boxes (31) connected with one another - via a connecting strut (37) aligned parallel to the receiving shaft (4) of a clamping lever (3) also articulated on both sides pivotably and folded upwards on the side panels (2) of the device (100)- ,
- wherein the clamping lever (3) is equipped with an anchoring mechanism arranged inside its connecting strut (37) and reaching into the anchoring box (31) thereof and having anchoring elements (32) that can be actuated by means of a one-man/one hand operating handle (36) arranged on the connecting strut (37) and that are able to engage in the two side panels (2) of the device (100), **characterised in**
- **that** by means of the screw drives (35) arranged on the protrusions (311) of the anchoring boxes (31), the receiving shaft (4) and with them the circular knives (40) and/or stamping rollers arranged on the latter can be fixed at a precise height and operating position to give the respectively desired cutting and/or stamping depth and
**that** the anchoring mechanism of the clamping lever (3) comprises two actuation beam parts (380, 380') formed with elongated holes (385) symmetrically inclined to each other and diverging upwards, displaceable longitudinally in opposite directions inside the sleeve-like connecting strut (37) with the anchoring elements, in particular snap-in hooks (32) that are able to engage in the side panels (2) of the device (100), wherein into the two inclined elongated holes (385) of the two actuation beam parts (380, 380') by means of a self-spring-loaded one man / one hand operating handle (36) displaceable transversely against the spring loading, in particular perpendicular to the connecting strut (37) in each case a sliding pin which can be displaced transversely with the connecting strut engages and thus provides for an opposite displacement of the anchoring beams (380, 380') with the anchoring-, in particular snap-in hooks (32).

2. Device according to claim 1, **characterised in that** the individual dough processing tools, in particular circular knives (40) and/or stamping rollers, in each case by means of a clamping ring with clamping screw (48), preferably, however, by means of quick-action clamping closure (42) with quick-action clamping lever (420) can be connected to the receiving shaft (4) in a constant position.

3. Device according to any one of claims 1 to 2, **characterised in that** the bearing cheeks (45) of the receiving shaft (4) are spring-loaded with the rotary bearings (46) into the recesses (20) of the side panels (2).

4. Device according to any one of claims 1 to 3, **characterised in that** the two side panels (2) has a scaling strut (25) with scaling (250) connecting the latter with one another, parallel to the receiving shaft (4) and to the connecting strut (37) of the clamping lever (3), on which a positioning aid (26) for a positionally precise fixing of the individual circular knives (40) and/or stamping rollers and the arranging of their distances (a) to one another on the receiving shaft (4) is arranged displaceably and can be fixed by means of fixing screw (27) in each scale position on the scaling strut (25).

## Revendications

1. Dispositif multiple de matriçage et/ou de découpage en longueur de pâte (100), comprenant une bande transporteuse large pour une amenée, en particulier continue, d'une bande de pâte large, maintenue de préférence à hauteur constante, et un arbre de réception (4), de préférence entraîné, agencé au-dessus de celle-ci, équipé d'une pluralité d'outils de traitement de pâte agencés espacés respectivement l'un de l'autre, en particulier couteaux circulaires (40) et/ou rouleaux de matriçage,
- dans lequel l'arbre de réception (4) est logé en rotation respectivement dans la zone de ses deux extrémités des deux côtés dans des mâchoires de palier (45) agencées réglables et déplaçables en hauteur dans des évidements (20) des deux panneaux latéraux (2) du dispositif (100),
- dans lequel les deux mâchoires de palier (45) de leur côté sont réglables en hauteur respectivement au moyen d'un mécanisme à vis de réglage d'outil, en particulier de coupe et/ou de profondeur de matriçage (35), agencé au niveau des deux boîtiers d'ancrage (31) - reliés l'un à l'autre par le biais d'une entretoise de liaison (37) orientée parallèlement à l'arbre de réception (4) d'un levier de serrage (3) articulé de manière relevable et pivotante des deux côtés également au niveau des panneaux latéraux (2) du dispositif (100),
- dans lequel le levier de serrage (3) est équipé d'un mécanisme d'ancrage présentant des éléments d'ancrage (32) agencés à l'intérieur de son entretoise de liaison (37) et s'étendant jusque dans ses boîtiers d'ancrage (31), actionnables au moyen d'une poignée de commande une personne/une main (36) agencée sur l'entretoise de liaison (37), pouvant être mis en prise dans les deux panneaux latéraux (2) du dispositif (100), **caractérisé en ce**
- **qu'**au moyen de mécanismes à vis (35) agencés dans des prolongements (311) des boîtiers d'ancrage (31), l'arbre de réception (4) et avec eux les couteaux circulaires (40) et/ou rouleaux de matriçage agencés sur celui-ci peuvent être fixés avec précision de position de fonctionnement et de hauteur sur la profondeur de coupe et/ou de matriçage respectivement souhaitée et
**que** le mécanisme d'ancrage du levier de serrage (3) comprend deux parties de barre d'actionnement (380, 380') déplaçables longitudinalement dans le sens contraire à l'intérieur de l'entretoise de liaison (37) de type douille, réalisées avec des trous oblongs (385) obliques symétriques l'un à l'autre, divergeant vers le haut, avec les éléments d'ancrage, en particuliers crochets d'encliquetage (32), pouvant être mis en prise dans les panneaux latéraux (2) du dispositif (100), dans lequel au moyen d'une poignée de commande une personne/une main (36) elle-même sollicitée par ressort, déplaçable contre la sollicitation par ressort transversalement, en particulier perpendiculairement, à l'entretoise de liaison (37), respectivement un tenon coulissant déplaçable transversalement avec celle-ci entre en prise dans les deux trous oblongs obliques (385) des deux parties de barre d'actionnement (380, 380') et assure ainsi un déplacement opposé des barres d'ancrage (380, 380') avec le crochet d'ancrage, en particulier crochets d'encliquetage (32),

2. Dispositif selon la revendication 1, **caractérisé en ce que** les différents outils de traitement de pâte, en particulier couteaux circulaires (40) et/ou rouleaux de matriçage, peuvent être liés à position constante au niveau de l'arbre de réception (4), respectivement au moyen d'un anneau de serrage avec des vis de serrage (48), mais de préférence au moyen d'une fermeture à serrage rapide (42) avec levier à serrage rapide (420).

3. Dispositif selon l'une quelconque des revendications 1 à 2, **caractérisé en ce que** les mâchoires de palier (45) de l'arbre de réception (4) sont sollicitées par ressort avec les paliers rotatifs (46) dans les évidements (20) des panneaux latéraux (2).

4. Dispositif selon l'une quelconque des revendications 1 à 3, **caractérisé en ce que** les deux panneaux latéraux (2) présentent une entretoise de mise à l'échelle (25) avec graduation (250) parallèle à l'arbre de réception (4) et à l'entretoise de liaison (37) du levier de serrage (3), les reliant entre eux, sur laquelle une aide au positionnement (26) est agencée de manière coulissante pour une fixation avec précision de position des différents couteaux circulaires (40) et/ou rouleaux de matriçage et pour l'arrangement de leurs distances (a) l'un par rapport à l'autre sur l'arbre de réception (4) et peut être fixée au moyen de la vis de fixation (27) dans chaque position d'échelle au niveau de l'entretoise de mise à l'échelle (25).
